# EUROPÄISCHE PATENTSCHRIFT

(11) **EP 1 834 108 B1**
(45) Veröffentlichungstag und Bekanntmachung des Hinweises auf die Patenterteilung: **24.09.2008**
(21) Anmeldenummer: 05805651.6
(22) Anmeldetag: 05.10.2005
(51) Int. Cl.: F16D 43/02, F16D 41/10, F16D 41/16

(54) **LASTDREHMOMENTSPERRE**
LOAD-TORQUE LOCK
DISPOSITIF DE BLOCAGE DE COUPLE DE CHARGE

(30) Priorität: 27.12.2004 DE 102004062815
(43) Veröffentlichungstag der Anmeldung: 19.09.2007
(73) Patentinhaber: ROBERT BOSCH GMBH, 70442 Stuttgart (DE)
(72) Erfinder: LAMPERT, Rico, 77880 Sasbach (DE); BUEYUEKASIK, Diyap, 77815 Buehl (DE); MILI, Tarek, 76139 Karlsruhe (DE)
(86) Internationale Anmeldenummer: PCT/EP2005/055014
(87) Internationale Veröffentlichungsnummer: WO 2006/069820

(56) Entgegenhaltungen:
- WO-A-03/054409
- US-A- 1 371 361
- US-A1- 2002 011 390
- US-B1- 6 229 233
- PATENT ABSTRACTS OF JAPAN Bd. 1998, Nr. 01, 30. Januar 1998 (1998-01-30) & JP 09 242785 A (KORETSUKU KK), 16. September 1997 (1997-09-16)

## Beschreibung

### Stand der Technik

Die Erfindung betrifft eine Lastdrehmomentsperre zum selbstständigen Sperren lastseitiger Drehmomente nach dem Oberbegriff des Patentanspruchs 1.

Unter der Vielzahl der bekannten Lastdrehmomentsperren befindet sich unter anderem eine Gruppierung, deren physikalischer Sperreffekt auf ein Klemm- beziehungsweise Verkantungsprinzip beruht, wobei die Zuordnung zum Klemmen oder Verkanten nicht eindeutig sein muss.

Unter dieser Gruppierung ist es aus der US PS 6, 229, 233 B1 bekannt, am Umfang einer gestellfesten Trommel einer Lastsperrkupplung mehrere Klemmrollen anzuordnen, die durch Drehen eines Antriebsteiles in eine neutrale Position bewegt werden und im Falle eines das Antriebsmoment übersteigenden Lastdrehmomentes von den Rampen eines Abtriebsteiles gegen die Wandung der Trommel gepresst werden. Dort bewirken sie eine Verklemmung zwischen dem Antriebsteil und der Trommel, so dass die Kupplung derartige Lastdrehmomente sperrt.

Aufgrund der sehr kleinen Berührungsflächen der Klemmrollen an der Trommelwandung ergeben sich dort relativ hohe Flächenpressungen, so dass derartige Lastsperrkupplungen nur für begrenzte Lastdrehmomente geeignet sind.

Aus der WO 03/05 44 09 ist ferner eine Lastdrehmomentsperre bekannt, bei der mehrere Klemmbolzen an einer ringförmigen gestellfesten Sperringwandung innen und außen anliegen und mittels einer Sperrscheibe über Antriebs- oder Abtriebsmittel derart verschwenkbar sind, dass sie bei einem abtriebsseitigen Drehmoment an den Sperringwandungen verkanten und die Drehbewegung blockieren beziehungsweise bei einem antriebsseitigen Drehmoment sich von den Sperringwandungen lösen. Auch hier treten aufgrund der kleinen Berührungsflächen der Klemmbolzen an den Sperringwandungen beim Sperren von Lastdrehmomenten hohe Flächenpressungen auf. Außerdem sind die Klemmbolzen auf einem relativ großen Radius außerhalb der fluchtenden An- und Abtriebswellen an der von einem Gehäuse umgebenen Sperringwandung angeordnet, wodurch sich ein systembedingter großer Einbauraum ergibt, was insbesondere im Fahrzeugbau problematisch sein kann.

Bei vielen Anwendungen in der Antriebstechnik wird aus Sicherheitsgründen eine Selbsthemmung gefordert, wobei der Antriebsstrang bei Ausfall des Antriebes und hohen anliegenden Lastdrehmomenten die Fähigkeit besitzen muss, im Stillstand zu verharren beziehungsweise zum Stillstand zu kommen. Hierzu werden oftmals Schneckengetriebe eingesetzt, die sich durch einen geräuscharmen und schwingungsdämpfenden Lauf mit hohen Untersetzungen auszeichnen. Dabei wird durch eine gezielte Auswahl der Verzahnungsgeometrie die Reibung so eingestellt, dass das Getriebe bei einem Wirkungsgrad von unter 50 % selbsthemmend wirkt. Das bedeutet jedoch, dass auch im Normalbetrieb mehr als die Hälfte der Energie in Form von Reibung verloren geht. Dies wirkt sich unmittelbar auf die Kosten und das Gewicht der entsprechend überdimensioniert ausgelegten Antriebe aus.

Mit der vorliegenden Erfindung wird angestrebt, eine zuverlässige und robuste Lastdrehmomentsperre zu entwickeln, die gegenüber den bekannten Systemen ein möglichst günstiges Verhältnis zwischen dem sperrbaren Lastdrehmoment und dem benötigten Bauraum sowie eine minimale Verlustleistung beim antriebsseitigen Durchtreiben in beide Drehrichtungen erzielt.

### Vorteile der Erfindung

Die erfindungsgemäße Lastdrehmomentsperre mit den im Kennzeichnungsteil des Patentanspruchs 1 aufgeführten Merkmalen hat den Vorteil, geringe Verlustleistung an der Lastdrehmomentsperre dadurch zu realisieren, dass bei antriebsseitigen Drehmomenten die Angriffsmittel der Antriebswelle unmittelbar mit den Angriffsmitteln der Abtriebswelle zusammen wirken. Ein weiterer Vorteil der erfindungsgemäßen Lösung ist das Sperren hoher Lastdrehmomente mittels Klemmkörper in einer kompakten Bauweise, wobei die Klemmkörper von den Lastdrehmomenten großflächig am gestellfesten Gehäuse festgeklemmt beziehungsweise mittels einer Verzahnung am Gehäuse arretiert werden.

Vorteilhafte Weiterbildungen und Verbesserungen der im Patentanspruch 1 angegebenen Merkmale ergeben sich durch die in den Unteransprüchen aufgeführten Maßnahmen. So ist es für einen robusten konstruktiven Aufbau und einer gleichmäßigen Kräfteverteilung am Umfang der Lastdrehmomentsperre von Vorteil, wenn ein ringförmiger Käfig aus zwei, vorzugsweise auf der An- und/oder Abtriebswelle zentrierten Ringteilen axial zusammengesetzt ist, zwischen denen drei am Umfang gleichmäßig verteilte Klemmkörper verschwenkbar gelagert angeordnet sind.

Um die Klemmkörper einerseits für beide Drehrichtungen gleich wirkend auszubilden und andererseits eine Betätigung der Klemmkörper durch auftretende Fliehkräfte zu vermeiden, wird in Weiterbildung der Erfindung vorgeschlagen, die Klemmkörper als nierenförmige Klemmplatten auszubilden, die im Bereich ihres Schwerpunktes mittels axialer Lagerzapfen beidseitig in Lagerbohrungen der beiden Ringteile des Käfigs aufgenommen sind und die am Außenumfang ihrer beiden Endabschnitte der Wandungskontur der Gehäusebohrung angepasst sind. In vorteilhafter Weise haben dabei die Klemmkörper im Bereich ihrer Lagerung jeweils einen radial nach innen gerichteten, axial verlaufenden Verschwenksteg, der in die Angriffsmittel der Abtriebswelle mit einem vorgegebenen Drehwinkelspiel hineinragt.

Zur Erzielung einer kompakten Ausführungsform der Lastdrehmomentsperre ist ferner von Vorteil, wenn die Angriffsmittel der Abtriebswelle jeweils aus zwei am Umfang radial nach außen gerichteten axialen Mitnahmeleisten gebildet sind, welche einen vorgegebenen Umfangsabstand voneinander haben. Um den ringförmigen Käfig beim Auftreten antriebsseitiger Drehmomente von der sich drehenden Antriebswelle mitnehmen zu können, wird in Ausgestaltung der Erfindung vorgeschlagen, den ringförmigen Käfig am Innenumfang jeweils in dem zwischen zwei Klemmkörpern liegenden Umfangsbereich mit einer radial nach innen gerichteten, axial verlaufenden Drehmitnahmerippe zu versehen, die jeweils in eine axiale Ausnehmung an den Angriffsmittels der Antriebswelle mit einem vorgegebenen Drehwinkelspiel hineinragt. In vorteilhafter Weise sind dabei die Angriffsmittel der Antriebswelle als klauenförmige axiale Vorsprünge ausgebildet, welche jeweils zwei radial nach außen gerichtete, vorzugsweise bis zum Innenumfang des Käfigs reichende Schenkel aufweisen, die einen die axiale Ausnehmung bildenden Umfangsabstand voneinander haben.

Für eine kompakte Bauform der Lastdrehmomentsperre ist ferner vorteilhaft, wenn die klauenförmigen Vorsprünge der Antriebswelle jeweils mit einem vorgegebenen Drehwinkelspiel zwischen zwei Mitnahmeleisten der Abtriebswelle axial eingreifen, wobei zweckmäßigerweise die An- und Abtriebswelle ineinander gelagert sind. Dabei sind die klauenförmigen Vorsprünge derart am Umfang der Antriebswelle angeordnet, dass sich bei antriebsseitigen Drehmomenten mit den Leisten der Abtriebswelle zur direkten Drehmomentübertragung zusammenwirken und dass bei lastseitigen Drehmomenten die Leisten der Abtriebswelle mit den Verschwenkstegen der Klemmkörper zu deren Arretierung oder Verklemmung an der Gehäusebohrung zusammenwirken. Für eine zuverlässige Funktion der Lastdrehmomentsperre ist ferner von Bedeutung, dass das Drehwinkelspiel zwischen der An- und Abtriebswelle größer ist als das Drehwinkelspiel zwischen der Abtriebswelle und den Klemmkörpern, und dass das letztere Drehwinkelspiel wiederum größer ist als das Drehwinkelspiel zwischen der Antriebswelle und dem ringförmigen Käfig.

Für eine zweckmäßige Ausgestaltung der Klemmkörper wird vorgeschlagen, die nierenförmigen Klemmplatten auf der Innenseite ihrer Endabschnitte jeweils mit einer die Endabschnitte verjüngenden Schräge zu versehen, welche zum Lösen der Klemmplatten vom Gehäuse mit einer Nase an der Außenseite der klauenförmigen Vorsprünge der Antriebswelle zusammenwirkt und die Klemmplatten in ihre neutrale Position zurückschwenken. Für den Anwendungsbereich mit größeren Lastdrehmomenten wird vorgeschlagen, die Wandung der Gehäusebohrung mit einer gleichmäßigen Innenverzahnung zu versehen und die Endabschnitte der Klemmplatten am Außenumfang mit einer entsprechenden Verzahnung auszubilden, die mindestens einen Zahn aufweist. In einfachster Ausführungsform und für die kleineren Lastdrehmomente wird vorgeschlagen, die Wandung der Gehäusebohrung als Klemmfläche, vorzugsweise mit erhöhtem Reibwert auszubilden und die Endabschnitte der im Käfig verschwenkbar gelagerten Klemmplatten am Außenumfang als Reibflächen auszubilden.

Das Axialspiel des auf der Antriebs- und/oder Abtriebswelle fliegend gelagerten Käfigs wird in einfachster Weise durch entsprechende Anschläge im Gehäuse der Lastdrehmomentsperre begrenzt. Da dies aber bei höheren Drehzahlen des Käfigs zu Schleifgeräuschen und Abrieb am Gehäuse führen kann, wird in vorteilhafter Weiterbildung der Erfindung vorgeschlagen, das axiale Spiel des fliegend gelagerten Käfigs durch jeweils einen Anschlag an der Antriebs- und der Abtriebswelle zu begrenzen. Zweckmäßigerweise ragen dabei einerseits der Anschlag der Antriebswelle bis vor die antriebsseitige Stirnseite der Drehmitnahmerippen des Käfigs und andererseits der Anschlag der Abtriebswelle bis vor die Stirnseite der Verschwenkstege der Klemmkörper.

Anstelle der Selbsthemmung durch eine permanent vorhandene Verlustreibung im Schneckengetriebe erfolgt nunmehr die Ableitung von Lastdrehmomenten in ein gestellfestes Gehäuse mittels eines reib- oder formschlüssigen Klemm-Mechanismusses.

### Zeichnung

Die Erfindung wird im Folgenden beispielhaft anhand der Figuren näher erläutert. Es zeigen:
Figur 1 die Einzelteile einer Lastdrehmomentsperre in raumbildlicher Darstellung und explosionsartiger Anordnung, Figur 2 die zusammengebaute Lastdrehmomentsperre aus Figur 1 als erstes Ausführungsbeispiel,
Figur 3 die Lastdrehmomentsperre aus Figur 2 in vergrößerter Darstellung im Querschnitt und in neutraler Ruhestellung. Figur 4 zeigt die Lastdrehmomentsperre aus Figur 2 beim Auftreten eines Lastdrehmomentes im Uhrzeigersinn,
Figur 5 die Lastdrehmomentsperre beim Auftreten eines Antriebsdrehmomentes im Uhrzeigersinn und
Figur 6 die Lastdrehmomentsperre beim Auftreten des Antriebsmomentes gegen den Uhrzeigersinn.
Figur 7 zeigt einen vergrößert dargestellten raumbildlichen Ausbruch des Gehäuses mit einem Klemmkörper und einem Käfig-Ringteil als zweites Ausführungsbeispiel,
Figur 8 zeigt in raumbildlicher vergrößerter Darstellung die Enden der Antriebs- und Abtriebswelle vor dem Zusammensetzen als zweites Ausführungsbeispiel und
Figur 9 zeigt einen Längsschnitt durch die zusammengebaute Lastdrehmomentsperre des zweiten Ausführungsbeispiels.

### Beschreibung der Ausführungsbeispiele

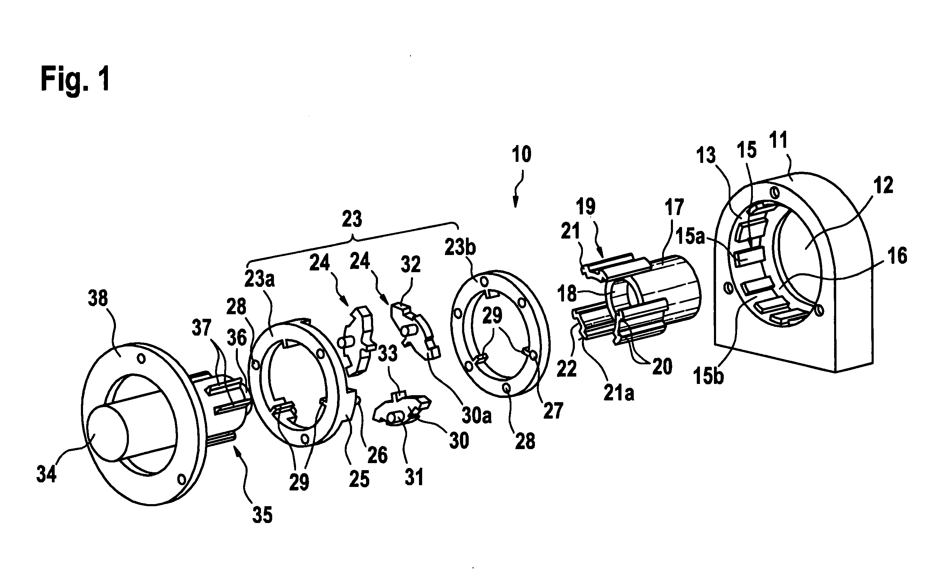

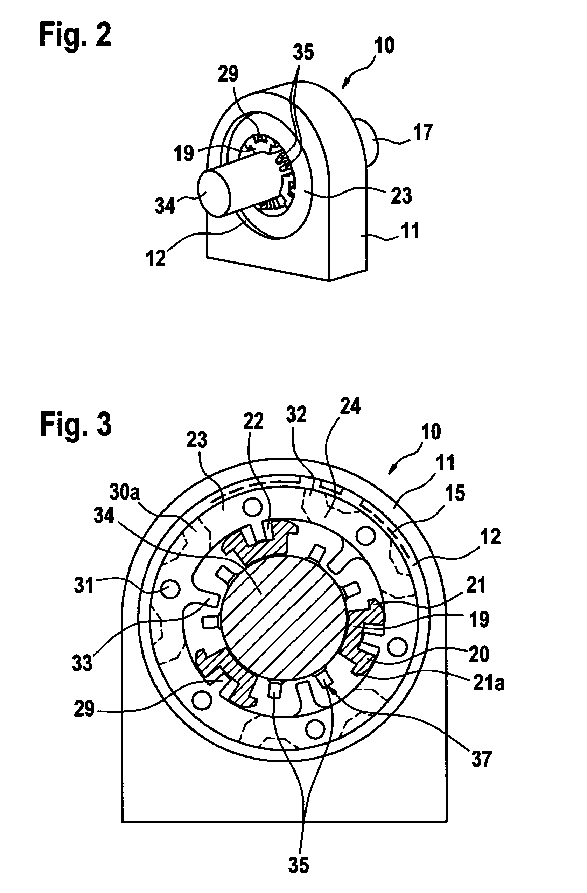

In Figur 1 sind die Einzelteile einer erfindungsgemäßen Lastdrehmomentsperre raumbildlich in einer Explosionsdarstellung auf einer fiktiven Mittelachse dargestellt. In Figur 2 sind die Einzelteile aus Figur 1 zu einer Lastdrehmomentsperre zusammengesetzt und mit 10 bezeichnet. Sie lässt sich für einen sehr großen Bereich von Antriebs- und Lastdrehmomenten auslegen und eignet sich besonders für elektrische Antriebe, wie sie beispielsweise in Kraftfahrzeugen in großen Stückzahlen benötigt werden. Die Lastdrehmomentsperre soll bei Abfall oder Wegfall eines antriebsseitigen Drehmomentes ein Zurückdrehen der Abtriebswelle beim Auftreten lastseitiger Drehmomente selbsttätig sperren. Die Lastdrehmomentsperre 10 besteht aus einem gestellfesten Gehäuse 11, welches alternativ auch integraler Bestandteil eines Getriebes oder eines Motorgehäuses sein kann. Das Gehäuse 11 hat eine zentrale Bohrung 12, an deren Wandung 13 eine Vielzahl gleichmäßig verteilter, radial vorstehender Leisten 15a angeordnet sind. Die axial ausgerichteten Leisten 15a bilden mit den zwischen ihnen liegenden Zwischenräumen 15b eine Innenverzahnung 15. Am hinteren Ende der Gehäusebohrung 12 befindet sich eine Radialschulter 16.

Figur 1 zeigt ferner den gesperreseitigen Endabschnitt einer Antriebswelle 17, die in einem nicht dargestellten Antriebsaggregat drehbar gelagert ist. Sie ist stirnseitig mit einer Lagerbohrung 18 versehen und hat drei über ihren Umfang gleichmäßig verteilt angeordnete Angriffsmittel 19, die als axiale, klauenförmige Vorsprünge ausgebildet sind. Sie weisen jeweils zwei radial nach außen gerichtete Schenkel 20 auf, welche einen vorgegebenen Umfangsabstand voneinander haben. An den Enden der Schenkel 20 ist jeweils außenseitig eine in Umfangsrichtung vorspringende Nase 21 mit einem schräg abfallenden Nasenrücken 21a angeformt. Zwischen den beiden Schenkeln 20 der klauenförmigen Angriffsmittel 19 befindet sich jeweils eine axiale Ausnehmung 22.

Des Weiteren sind in Figur 1 zwei Ringteile 23a, 23b erkennbar, die zu einem ringförmigen Käfig 23 zusammengesetzt werden und zwischen denen drei am Umfang gleichmäßig verteilt angeordnete Klemmkörper 24 verschwenkbar gelagert werden. Das eine Ringteil 23a des Käfigs 23 hat drei am Umfang gleichmäßig verteilte zum anderen Ringteil 23b gerichtete axiale Vorsprünge 25, die stirnseitig jeweils einen Fixierzapfen 26 aufweisen. Die Fixierzapfen 26 werden beim Zusammensetzen des Käfigs 23 in entsprechende Fixierbohrungen 27 des Ringteiles 23b eingesetzt. Mitten zwischen den Vorsprüngen 25 des linken Ringteiles 23a und zwischen den Fixierbohrungen 27 des rechten Ringteiles 23b befinden sich jeweils Lagerbohrungen 28 für drei Klemmkörper 24. Am Innenumfang der Ringteile 23a, 23b des Käfigs 23 befindet sich jeweils im Bereich der Vorsprünge 25 beziehungsweise Fixierbohrungen 27 eine radial nach innen gerichtete, axial verlaufende Drehmitnahmerippe 29. Die Klemmkörper 24 bestehen aus nierenförmigen Klemmplatten 30, die im Bereich ihres Schwerpunktes mit einem beidseitig axial vorstehenden Lagerzapfen 31 versehen sind. Die Lagerzapfen 31 werden beim Zusammenbau des Käfigs 23 in den dort vorhandenen Lagerbohrungen 28 aufgenommen, um die Klemmkörper 24 im Käfig 23 verschwenkbar zu lagern. Die beiden Endabschnitte 30a der nierenförmigen Klemmplatten 30 sind dabei am Außenumfang der Wandungskontur der Gehäusebohrung 12 angepasst. Das heißt im vorliegenden Ausführungsbeispiel, dass die Endabschnitte 30a jeweils einen Zahn 32 bilden, welcher in die Innenverzahnung 15 der Gehäusebohrung 12 einzugreifen vermag. Die Klemmkörper 24 haben im Bereich ihrer Lagerzapfen 31 jeweils einen radial nach innen gerichteten, axial verlaufenden Verschwenksteg 33 mittels dem beim Auftreten von Lastdrehmomenten die Klemmkörper 24 von einer Abtriebswelle 34 zur Arretierung am Gehäuse 11 verschwenkbar sind.

Ebenso wie das Ende der Antriebswelle 17 ragt auch die Abtriebswelle 34 mit ihrem Ende mit axial ausgerichteten Angriffsmitteln 35 in die Gehäusebohrung 12. Die Abtriebswelle 34 ist dabei ebenfalls in einem nicht dargestellten, gestellfesten Lager drehbar aufgenommen und hat an ihrem stirnseitigen Ende einen Lagerzapfen 36, der beim Zusammenbau der Lastdrehmomentsperre in die Lagerbohrung 18 der Antriebswelle 17 eingesetzt wird. Die Angriffsmittel 35 der Abtriebswelle 34 werden jeweils aus zwei am Umfang radial nach außen gerichtete axial verlaufende Mitnahmeleisten 37 gebildet, welche einen vorgegebenen Umfangsabstand von einander haben. Schließlich ist in Figur 1 noch ein Anschlagring 38 dargestellt, der nach dem Zusammenbau der Lastdrehmomentsperre an der vorderen Stirnseite des Gehäuses 11 festgeschraubt wird und einen axialen Anschlag für den aus den Ringteilen 23a, 23b zusammengesetzten Käfig 23 bildet.

Figur 2 zeigt die Lastdrehmomentsperre 10 im zusammengebauten Zustand, jedoch ohne den vorderen Anschlagring 38, so dass sie den Blick auf die Gehäusebohrung 12 mit dem dort befindlichen Käfig 23 frei gibt. Der Käfig 23 ist dabei auf den klauenförmigen Angriffsmittel 19 der Antriebswelle 17 fliegend gelagert. Ferner ist in Figur 2 erkennbar, dass die Drehmitnahmerippen 29 des Käfigs 23 mit den Angriffsmitteln 19 der Antriebswelle 17 zusammenwirken, um bei sich drehender Antriebswelle 17 den Käfig 23 mitzunehmen.

Mit dem Zusammensetzen der Lastdrehmomentsperre 10 werden die Drehmitnahmerippen 29 in die axialen Ausnehmungen 22 der Angriffsmittel 19 an der Antriebswelle 17 eingeschoben und mit dem Einsetzen der Abtriebswelle 34 in die Lagerbohrung 18 der Antriebswelle 17 werden die an ihrem Umfang angeordneten Leisten 37 jeweils zwischen einem klauenförmigen Angriffsmittel 19 der Antriebswelle 17 und einem Verschwenksteg 33 der Klemmkörper 24 eingeschoben.

Mit den Figuren 3 bis 6 soll nunmehr die Wirkungsweise der Lastdrehmomentsperre 10 näher erläutert werden. Sie zeigen jeweils einen Querschnitt durch die Lastdrehmomentsperre 10 von der Abtriebsseite her gesehen.

Figur 3 zeigt den Querschnitt der Lastdrehmomentsperre 10 in ihrer neutralen Ruhelage. Dabei ragen die Drehmitnahmerippen 29 des Käfigs 23 jeweils in eine Ausnehmung 22 der klauenförmigen Angriffsmittel 19 am Ende der Antriebswelle 17. Aufgrund der breiteren Ausnehmung 22 besteht zwischen den Drehmitnahmerippen 29 und den Angriffsmitteln 19 der Antriebswelle 17 ein Drehwinkelspiel. Des Weiteren ist erkennbar, dass die klauenförmigen Angriffsmittel 19 der Antriebswelle 17 jeweils zwischen zwei Mitnahmeleisten 37 der Abtriebswelle 34 mit einem vorgegebenen Drehwinkelspiel angeordnet sind. Schließlich ragen auch noch die Verschwenkstege 33 der Klemmkörper 24 mit einem vorgegebenen Drehwinkelspiel jeweils zwischen zwei Mitnahmeleisten 37 der Abtriebswelle 34. Die Klemmkörper 24 nehmen dabei eine Mittelstellung ein, so dass ihre Zähne 32 mit der Innenverzahnung 15 der Gehäusebohrung 12 außer Eingriff stehen.

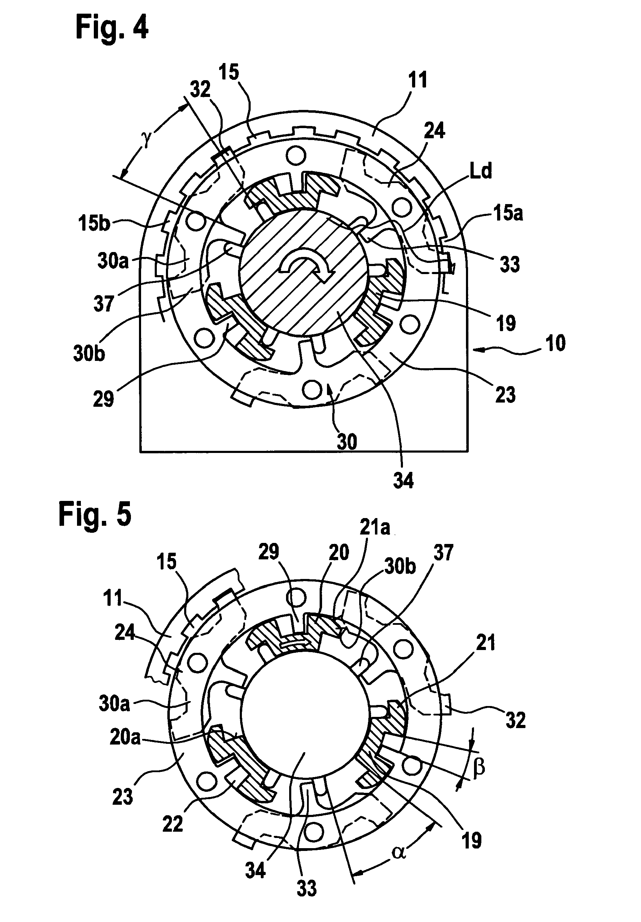

Figur 4 zeigt einen Querschnitt durch die Lastdrehmomentsperre 10 beim Auftreten eines im Uhrzeigersinn wirkenden Lastdrehmomentes der Abtriebswelle 34. Dabei dreht sich die Abtriebswelle 34 im Uhrzeigersinn soweit, bis jeweils jeder zweite der sechs Mitnahmeleisten 37 am Umfang der Abtriebswelle 34 sich an einen Verschwenksteg 33 der Klemmkörper 24 anlegt und die Klemmkörper 24 dabei auf ihren Lagerzapfen 31 verschwenkt. Dabei tritt der in Drehrichtung der Abtriebswelle 34 gesehen hintere Zahn 32 der Klemmkörper 24 aus den äußeren Umfangsbereich des Käfigs 23 radial nach außen heraus und rastet in die nächste Lücke 15b zwischen den Leisten 15a der Innenverzahnung 15 an der Gehäusebohrung 12 ein. Außerdem werden dabei die Angriffsmittel 19 der Antriebswelle 17 von den drei übrigen Mitnahmeleisten 37 der Abtriebswelle 34 um wenige Grade im Uhrzeigersinn gedreht, so dass die Drehmitnahmerippen 29 - wie in Figur 4 dargestellt - nicht mehr an der Wandung in den Ausnehmungen 22 der Angriffsmittel 19 anliegen. Sollten sich dagegen die Zähne 32 der Klemmkörper 24 gerade unter einer Leiste 15a der Innenverzahnung 15 befinden, wird der gesamte Käfig 23 über die Verschwenkstege 33 von den damit zusammenwirkenden Leisten 37 der Abtriebswelle 34 soweit mitgenommen, bis die Zähne 32 in die nächste Lücke 15b der Innenverzahnung 15 einrasten. In dieser Stellung wird - wie angedeutet - das Lastdrehmoment Ld von der Abtriebswelle 34 in das Gehäuse 11 der Lastdrehmomentsperre 10 abgeleitet. Der Abtrieb wird damit stillgesetzt und das Abtriebsdrehmoment wird nicht mehr auf die Antriebsseite der Lastdrehmomentsperre 10 übertragen.

Eine zu Figur 4 spiegelbildliche Anordnung der Lastdrehmomentsperre 10 ergibt sich beim Auftreten eines Lastdrehmomentes an der Abtriebswelle 34 entgegen dem Uhrzeigersinn. Da die Verschwenkstege 33 der Klemmkörper 24 sich jeweils zwischen zwei Mitnahmeleisten 37 der Abtriebswelle 34 befinden, besteht zwischen ihnen ein Drehwinkelspiel γ. Dieses Drehwinkelspiel γ muss gegebenenfalls von der Abtriebswelle 34 durchlaufen werden, bevor die Klemmkörper 24 von den Leisten 37 der Abtriebswelle 34 in ihre Arretierstellung gemäß Figur 4 verschwenkt werden können.

Figur 5 zeigt nochmals den Querschnitt der Lastdrehmomentsperre 10 in ihrer Arretierstellung gemäß Figur 4, aus der heraus nunmehr die Funktionsweise beim Auftreten eines antriebsseitigen Drehmomentes erläutert wird. In diesem Fall wird die Antriebswelle und mit ihr deren klauenförmige Angriffsmittel 19 im Uhrzeigersinn gedreht. Dabei schiebt sich zunächst jeweils eine Nase 21 der Schenkeln 20 mit ihrem Nasenrücken 21a unter eine den benachbarten Endabschnitt 30a verjüngende Schräge 30b der Klemmkörper 24 und schwenkt diesen zurück in seine neutrale Stellung gemäß Figur 3. Damit wird der Zahn 32 der Klemmkörper 24 aus der Innenverzahnung 15 am Gehäuse 11 außer Eingriff gebracht und damit die Arretierung des Käfigs 23 aufgehoben. Durch das Drehen der Antriebswelle 17 wird außerdem ein Drehwinkelspiel β durchlaufen, mit dem die Drehmitnahmerippen 29 des Käfigs 23 zwischen den beiden Schenkeln 20 der klauenförmigen Angriffsmittel 19 in der Ausnehmung 22 angeordnet sind. Des Weiteren müssen die Angriffsmittel 19 der Antriebswelle 17 noch ein Drehwinkelspiel α durchlaufen, bis die Außenwand 20a des in Drehrichtung vorderen Schenkels 20 der klauenförmigen Angriffsmittel 19 sich an die nächste Leiste 37 der Abtriebswelle 34 anlegt. Sobald dies der Fall ist, wirken die antriebsseitigen Angriffsmittel 19 unmittelbar mit den Leisten 37 der Abtriebswelle 34 zusammen und nehmen die Abtriebswelle 34 mit. Das Drehmoment wird dadurch unmittelbar von der Antriebswelle 17 auf die Abtriebswelle 34 übertragen und der Käfig 23 mit den Klemmkörpern 24 wird lediglich an den Drehmitnahmerippen 29 von den Schenkeln 20 der klauenförmigen Angriffsmittel 19 lose mitgenommen.

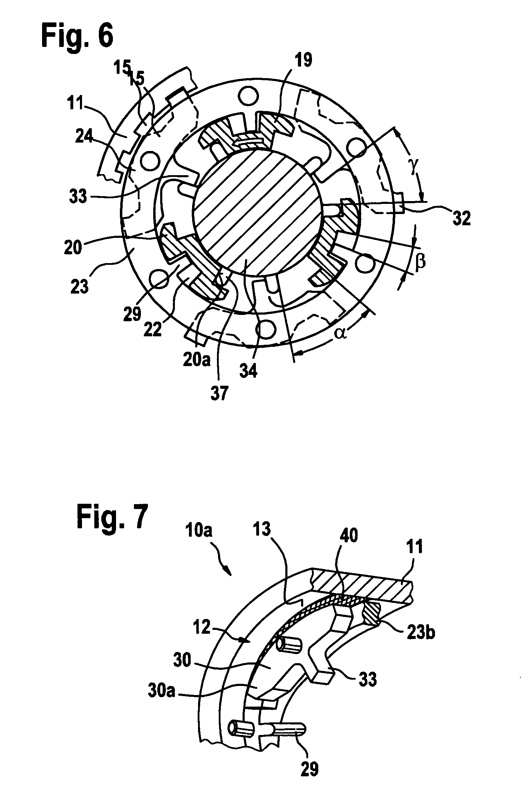

Mit Hilfe der Figur 6 wird nun die Funktion der Lastdrehmomentsperre 10 für den Fall erläutert, dass von der Antriebswelle 17 ein Drehmoment entgegen dem Uhrzeigersinn auftritt. Die Ausgangslage ist hier die gleiche wie in Figur 4 und 5. Das heißt, dass sich die Lastdrehmomentsperre zunächst in ihrer Arretierstellung befindet, in der jeweils ein Zahn 32 der Klemmkörper 24 in die Innenverzahnung 15 der Gehäusebohrung 12 eingreift. In dieser Stellung liegen bereits die drei Angriffsmittel 19 der Antriebswelle 17 mit ihrer in Drehrichtung betrachteten Außenwand 20a jeweils an einer Leiste 37 der Abtriebswelle 34 an. Damit wird bei einer Linksdrehung der Antriebswelle 17 die Abtriebswelle 34 sofort mitgedreht. Bei dieser Drehung entgegen dem Uhrzeigersinn entfernen sich nunmehr auch die übrigen drei Mitnahmeleisten 37 der Abtriebswelle 34 von den Verschwenkstegen 33 der drei Klemmkörper 24 soweit, bis die Drehmitnahmerippen 29 des Käfigs 22 an der rechten Wandung der Ausnehmungen 22 in den Angriffsmitteln 19 der Antriebswelle 17 zur Anlage kommen. Dadurch wird die Arretierstellung der Klemmkörper freigegeben. Beim Andrehen der Antriebswelle 17 werden nunmehr auch die drei in die Ausnehmungen 22 der klauenförmigen Angriffsmittel 19 ragenden Drehmitnahmerippen 29 des Käfigs 23 jeweils von den hinteren Schenkel 20 mitgenommen. Aufgrund der angeschrägten hinteren Flanke der Zähne 32 an den Enden der Klemmkörper 24 gleiten diese nunmehr durch die Linksdrehung des Käfigs 23 aus der Innenverzahnung 15 des Gehäuses 11 heraus und verschwenken die Klemmkörper 24 in ihre neutrale Position gemäß Figur 3. Alternativ dazu können die Klemmkörper 24 aus ihrer Arretierstellung auch dadurch gelöst werden, dass die Antriebswelle 17 zunächst um einige Grade nach rechts im Uhrzeigersinn gedreht wird, wobei sich dann, wie zu Figur 5 erläutert, die Nasen 21 der klauenförmigen Angriffsmittel 19 unter die Klemmkörper 24 schieben und diese in ihre neutrale Position schwenken. Danach erfolgt dann der Antrieb entgegen dem Uhrzeigersinn.

Da auch bei einer Linksdrehung der Antriebswelle 17 verschiedene Ausgangslagen der Lastdrehmomentsperre 10 möglich sind, müssen auch hier die sich zueinander verdrehbaren Teile bestimmte Drehwinkelspiele haben. Dabei ist das Drehwinkelspiel α zwischen der Antriebswelle 17 und der Abtriebswelle 34 größer gewählt als das Drehwinkelspiel γ zwischen der Abtriebswelle 34 und den Klemmkörpern 24. Außerdem ist das Drehwinkelspiel γ wiederum größer als das Drehwinkelspiel β zwischen der Antriebswelle 17 und dem Käfig 23.

In den Figuren 7 bis 9 ist eine modifizierte Lastdrehmomentsperre 10a als zweites Ausführungsbeispiel der Erfindung dargestellt. Dabei zeigt die Figur 7 einen Ausbruch in raumbildlicher Darstellung der Lastdrehmomentsperre 10a ohne Antriebs- und Abtriebswelle. Hier ist erkennbar, dass das Gehäuse 11 an der Wandung 13 der Gehäusebohrung 12 anstelle einer Innenverzahnung eine Klemmfläche 40 mit erhöhtem Reibwert aufweist. Außerdem werden die Endabschnitte 30a der im Käfig verschwenkbar gelagerten Klemmplatten 30 anstelle der im ersten Ausführungsbeispiel ausgebildeten Zähne 32 am Außenumfang jeweils mit einer Reibfläche 41 versehen. Bei dieser Ausführung können kleinere Lastdrehmomente bis zu 0,5 Nm von der Lastdrehmomentsperre 10a beherrscht werden.

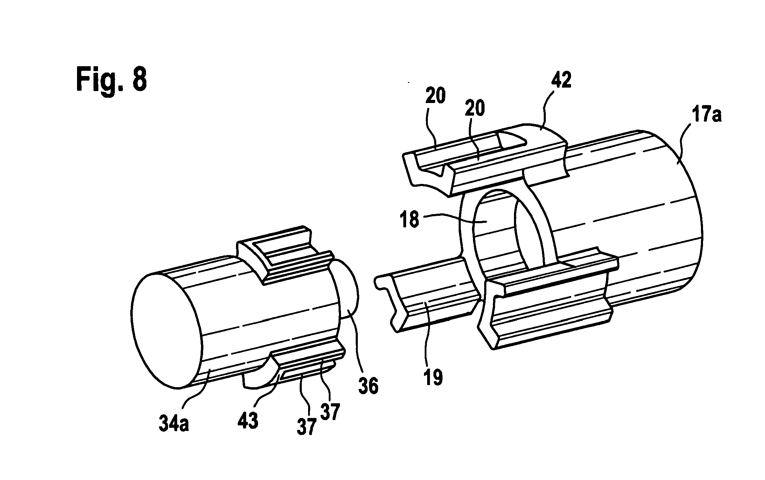

In Figur 8 sind die Enden der Antriebswelle 17a und der Abtriebswelle 34a in modifizierter Ausführung zum ersten Ausführungsbeispiel in vergrößerter, raumbildlicher Darstellung erkennbar. Dort sind an den axial vorstehenden, klauenförmig ausgebildeten Angriffsmitteln 19 am Ende der Antriebswelle 17a die beiden Schenkel 20 jeweils an ihrem hinteren Ende durch eine Wand 42 miteinander verbunden. In gleicher Weise sind an der Abtriebswelle 34a jeweils die paarweise mit kleinerem Abstand am Umfang angeordneten Mitnahmeleisten 37 an ihrem hinteren Ende durch eine Wand 43 miteinander verbunden.

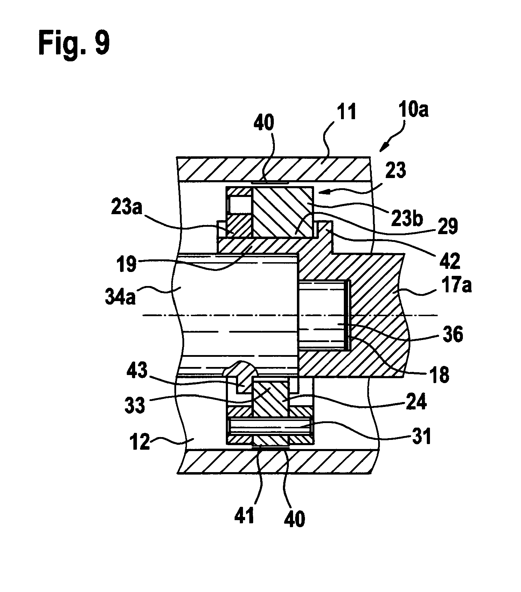

In Figur 9, in der die Lastdrehmomentsperre 10a im zusammengebauten Zustand im Längsschnitt dargestellt ist, ist nun erkennbar, dass die Wände 42 und 43 an der Antriebswelle 17a und der Abtriebswelle 34a jeweils einen Anschlag bilden, mit dem das axiale Spiel des fliegend gelagerten Käfigs 23 begrenzt wird. Dabei ragt die Wand 42 der Antriebswelle 17a bis vor die antriebsseitige Stirnseite der Drehmitnahmerippen 29 des Käfigs 23 und die Wand 43 der Abtriebswelle 34a ragt jeweils bis vor die Stirnseite der Verschwenkstege 33 an den Klemmkörpern 24.

Zwischen der rechteckförmigen Innenverzahnung 15 der Gehäusebohrung 12 im ersten Ausführungsbeispiel und der Klemmfläche 40 an der Wandung 13 der Gehäusebohrung 12 im zweiten Ausführungsbeispiel sind eine Vielzahl verschiedener Ausführungsformen für ein verdrehfestes Aufnehmen der Lastdrehmomente im Rahmen der vorliegenden Erfindung möglich. So lässt sich beispielsweise bei antriebsseitigen Drehmomenten die Entriegelung der Lastdrehmomentsperre 10 dadurch verbessern, dass die Enden der Klemmkörper 24 mit einer Sägezahnkontur versehen werden. Dabei kann es auch zweckmäßig sein, zwischen dem Käfig 23 und den Klemmkörpern 24 Rückstellfedern einzusetzen, welche die Klemmkörper nach Wegfall des Lastdrehmomentes in ihre neutrale Position halten beziehungsweise in diese Position zurückschwenken. Damit lässt sich auch zuverlässig verhindern, dass im Normalbetrieb durch eine Drehbeschleunigung des dann mitzunehmenden Käfigs 23 die Klemmkörper 24 selbsttätig verschwenken. Die Enden der Antriebs- und Abtriebswelle können sowohl als Schmiedeteile wie auch als Aufsätze aus Kunststoffteilen realisiert werden, die über form- oder reibschlüssige Verbindungen auf die Wellenenden aufgebracht werden. Grundsätzlich lässt sich die als Einwegkupplung aufgebaute Lastdrehmomentsperre in bevorzugter Anwendung bei einem elektrischen Antriebsaggregat mit Untersetzungsgetriebe sowohl zwischen Motor und Getriebe als auch zwischen Getriebe und Abtriebswelle einsetzen. Bei einem Schneckengetriebe mit relativ großem Schneckenrad können beispielsweise die klauenförmigen Angriffsmittel 19 auf deren Stirnseite anstatt auf einer Antriebswelle angeordnet sein, so dass sie bei der Herstellung des Schneckenrades in dessen Nabengeometrie mit integriert werden. Der Käfig 23 wird dabei auf die klauenförmigen Angriffsmittel aufgesetzt und fliegend gelagert und die axiale Innenverzahnung wird in einem den Käfig 23 mit den Klemmkörpern 24 umgebenden Bereich des Getriebegehäuses angebracht.

## Patentansprüche

1. Lastdrehmomentsperre zum selbsttätigen Sperren lastseitiger Drehmomente beim Ab- oder Wegfall eines antriebsseitigen Drehmomentes unter Beibehaltung der Übertragungsmöglichkeit antriebsseitiger Drehmomente, bestehend aus einem gestellfesten Gehäuse (11) mit einer zentrischen Gehäusebohrung (12), einer drehbar gelagerten Antriebswelle (17), welche mit axial ausgerichteten Angriffsmitteln (19) in die Gehäusebohrung hineinragt, einer drehbar gelagerten Abtriebswelle (34), welche ebenfalls mit axial ausgerichteten Angriffsmitteln (37) in die Gehäusebohrung hineinragt und mit mindestens einem außermittig in der Gehäusebohrung angeordneten Klemmkörper (24), welcher derart verschwenkbar gelagert ist, dass er einerseits durch lastseitige Drehmomente von den Angriffsmitteln der Abtriebswelle an der Wandung der Gehäusebohrung arretier- beziehungsweise festklemmbar ist und andererseits durch antriebsseitige Drehmomente von den Angriffsmitteln der Antriebswelle von der Wandung der Gehäusebohrung lösbar und umlaufend mitnehmbar ist, **dadurch gekennzeichnet, dass** die Angriffsmittel (37) der Abtriebswelle (34) so angeordnet sind, dass sie einerseits bei antriebsseitigen Drehmomenten mit den Angriffsmitteln (19) der Antriebswelle (17) zusammenwirken und dass sie andererseits bei abtriebsseitigen Lastdrehmomenten mit dem mindestens einen Klemmkörper (24) zusammenwirken.

2. Lastdrehmomentsperre nach Anspruch 1, **dadurch gekennzeichnet, dass** die Angriffsmittel (37) der Abtriebswelle (34) jeweils aus zwei am Umfang radial nach außen gerichteten axialen Mitnahmeleisten gebildet sind, welche einen vorgegebenen Umfangsabstand voneinander haben.

3. Lastdrehmomentsperre nach Anspruch 1 oder 2, **dadurch gekennzeichnet, dass** der mindestens eine Klemmkörper (24) in einem ringförmigen Käfig (23) axial gelagert ist, der in der Gehäusebohrung (12) vorzugsweise, auf den Angriffsmitteln (19) der Antriebswelle (17) fliegend gelagert ist und Drehmitnahmen (29) aufweist, welche bei antriebsseitigen Drehmomenten mit den Angriffsmitteln (19) der Antriebswelle (17) zusammenwirken.

4. Lastdrehmomentsperre nach Anspruch 3, **dadurch gekennzeichnet, dass** der ringförmige Käfig (23) aus zwei Ringteilen (23a, 23b) axial zusammengesetzt ist, zwischen denen mehrere vorzugsweise drei am Umfang gleichmäßig verteilte Klemmkörper (24) verschwenkbar gelagert angeordnet sind, die ihrerseits Verschwenkmittel (33) aufweisen, die bei lastseitigen Drehmomenten mit den Angriffsmitteln (37) der Abtriebswelle (34) zusammenwirken.

5. Lastdrehmomentsperre nach Anspruch 4, **dadurch gekennzeichnet, dass** die Klemmkörper (24) aus nierenförmigen Klemmplatten (30) bestehen, die im Bereich ihres Schwerpunktes mittels axialer Lagerzapfen (31) beidseitig an den beiden Ringteilen (23a, 23b) des Käfigs (23) verschwenkbar aufgenommen sind und die am Außenumfang ihrer beiden Endabschnitte (30a) der Wandungskontur der Gehäusebohrung (12) angepasst sind.

6. Lastdrehmomentsperre nach Anspruch 5, **dadurch gekennzeichnet, dass** die Klemmkörper (24) im Bereich ihrer Lagerzapfen (31) jeweils einen radial nach innen gerich teten, axial verlaufenden Verschwenksteg (33) haben, der jeweils zwischen zwei axiale Mitnahmeleisten (37) der Abtriebswelle (34) mit einem vorgegebenen Drehwinkelspiel (α) hineinragt.

7. Lastdrehmomentsperre nach einem der Ansprüche 3 bis 6, **dadurch gekennzeichnet, dass** der ringförmige Käfig (23) am Innenumfang jeweils in seinem zwischen zwei Klemmkörpern (24) liegenden Umfangsbereich eine radial nach innen gerichtete, axial verlaufende Drehmitnahmerippe (29) aufweist, die jeweils in eine axiale Ausnehmung (22) an den Angriffsmittels (19) der Antriebswelle (17) mit einem vorgegebenen Drehwinkelspiel (β) hineinragt.

8. Lastdrehmomentsperre nach Anspruch 7, **dadurch gekennzeichnet, dass** die Angriffsmittel (19) der Antriebswelle (17) klauenförmig ausgebildet sind und jeweils zwei radial nach außen gerichtete, vorzugsweise bis zum Innenumfang des Käfigs (23) reichende, axial verlaufende Schenkel (20) aufweisen, die einen die axiale Ausnehmung (22) bildenden Umfangsabstand voneinander haben.

9. Lastdrehmomentsperre nach Anspruch 8, **dadurch gekennzeichnet, dass** die klauenförmigen Angriffsmittel (19) der Antriebswelle (17) jeweils mit einem vorgegebenen Drehwinkelspiel (α) zwischen zwei Mitnahmeleisten (37) der Abtriebswelle (34) eingreifen, wobei Antriebs- und Abtriebswelle (17, 34) vorzugsweise ineinander gelagert sind.

10. Lastdrehmomentsperre nach Anspruch 9, **dadurch gekennzeichnet, dass** die antriebsseitigen Angriffsmittel (19) am Ende der Antriebswelle (17) axial vorstehen und jeweils mit einem Drehwinkelspiel (α) zwischen zwei benachbarte Mitnahmeleisten (37) der Abtriebswelle ragen.

11. Lastdrehmomentsperre nach Anspruch 10, **dadurch gekennzeichnet, dass** das Drehwinkelspiel (α) zwischen Antriebs- und Abtriebswelle (17, 34) größer ist als das Drehwinkelspiel (γ), zwischen Abtriebswelle (34) und Klemmkörper (24) und das letzteres Drehwinkelspiel (γ) wiederum größer ist als das Drehwinkelspiel (β) zwischen Antriebswelle (17) und Käfig (23).

12. Lastdrehmomentsperre nach einem der Ansprüche 5 bis 11, **dadurch gekennzeichnet, dass** die nierenförmigen Klemmplatten (30) auf der Innenseite ihrer Endabschnitte (30a) jeweils eine die Endabschnitte verjüngende Schräge (30b) aufweisen, welche zum Lösen der Klemmkörper (24) vom Gehäuse (11) mit einer Nase (21) an der Außenwand (20a) der klauenförmigen Angriffsmittel (19) der Antriebswelle (17) zusammenwirkt um die Klemmkörper (24) in ihre neutrale Position zurückzuschwenken.

13. Lastdrehmomentsperre nach Anspruch 5, **dadurch gekennzeichnet, dass** die Wandung (13) der Gehäusebohrung (12) mit einer gleichmäßigen Innenverzahnung (15) versehen ist und dass die Endabschnitte (30a) der Klemmplatten (30) am Außenumfang eine entsprechende Verzahnung mit mindestens einem Zahn (32) aufweist.

14. Lastdrehmomentsperre nach Anspruch 5, **dadurch gekennzeichnet, dass** die Wandung (13) der Gehäusebohrung (12) eine Klemmfläche (40), vorzugsweise mit erhöhtem Reibwert ist und dass die Endabschnitte (30a) der Klemmplatten (30) am Außenumfang als Reibfläche (41) ausgebildet sind.

15. Lastdrehmomentsperre nach einem der Ansprüche 6 bis 14, **dadurch gekennzeichnet, dass** das axiale Spiel des fliegend gelagerten Käfigs (23) durch jeweils einen Anschlag (42, 43) an der Antriebs- und Abtriebswelle (17, 34) begrenzt ist.

16. Lastdrehmomentsperre nach Anspruch 15, **dadurch gekennzeichnet, dass** der Anschlag (42) der Antriebswelle (17) bis vor die antriebsseitige Stirnseite der Drehmitnahmerippen (29) des Käfigs (23) und der Anschlag (43) der Abtriebswelle (34) bis vor die Stirnseite der Verschwenkstege (33) der Klemmkörper (24) ragt.

## Claims

1. Load-torque lock for automatically locking load-side torques when a drive-side torque is lost or eliminated while maintaining the possibility of transmitting drive-side torques, composed of a housing (11) which is fixed to a frame and has a central housing bore (12), a rotatably mounted drive shaft (17) which projects with axially aligned engagement means (19) into the housing bore, a rotatably mounted output shaft (34) which also projects with axially aligned engagement means (37) into the housing bore, and with at least one clamping element (24) which is arranged off centre in the housing bore and which is mounted so as to be pivotable in such a way that it can, on the one hand, be locked or clamped tight by load-side torques from the engagement means of the output shaft on the wall of the housing bore and, on the other hand, can be driven by drive-side torques from the engagement means of the drive shaft in such a way that it can be released from the wall of the housing bore and entrained in rotation, **characterized in that** the engagement means (37) of the output shaft (34) are arranged in such a way, that, on the one hand, in the case of drive-side torques they interact with the engagement means (19) of the drive shaft (17), and that, on the other hand, in the case of output-side load torques they interact with the at least one clamping element (24).

2. Load-torque lock according to Claim 1, **characterized in that** the engagement means (37) of the output shaft (34) are each formed from two axial driver bars which are directed radially outward on the circumference and have a predefined circumferential spacing from one another.

3. Load-torque lock according to Claim 1 or 2, **characterized in that** the at least one clamping element (24) is mounted axially in an annular cage (23) which is mounted in a cantilevered fashion in the housing bore (12) preferably on the engagement means (19) of the drive shaft (17), and has rotary driver means (29) which interact with the engagement means (19) of the drive shaft (17) in the case of drive-side torques.

4. Load-torque lock according to Claim 3, **characterized in that** the annular cage (23) is composed axially of two annular parts (23a, 23b) between which a plurality of clamping elements (24), preferably three distributed uniformly over the circumference, are arranged mounted in a pivotable fashion and themselves have pivoting means (33) which interact with the engagement means (37) of the output shaft (34) in the case of load-side torques.

5. Load-torque lock according to Claim 4, **characterized in that** the clamping elements (24) are composed of kidney-shaped clamping plates (30) which are held in the region of their centre of gravity so as to be pivotable by means of axial bearing journals (31) on each side of the two annular parts (23a, 23b) of the cage (23), and which are adapted to the outer circumference of their two end sections (30a) of the wall contour of the housing bore (12).

6. Load-torque lock according to Claim 5, **characterized in that** the clamping elements (24) each have, in the region of their bearing journals (31), a radially inwardly directed, axially extending pivoting web (33) which projects in each case between two axial driver bars (37) of the output shaft (34) with a predefined rotational angle play (α).

7. Load-torque lock according to one of Claims 3 to 6, **characterized in that** the annular cage (23) has on the inner circumference, in each case in its circumferential region which lies between two clamping elements (24), a radially inwardly directed, axially extending rotary driver rib (29) which projects in each case into an axial recess (22) on the engagement means (19) of the drive shaft (17) with a predefined rotary angle play (β).

8. Load-torque lock according to Claim 7, **characterized in that** the engagement means (19) of the drive shaft (17) are of claw-shaped design and have in each case two radially outwardly directed, axially extending limbs (20) which preferably reach as far as the inner circumference of the cage (23) and have a circumferential spacing from one another which forms the axial recess (22).

9. Load-torque lock according to Claim 8, **characterized in that** the claw-shaped engagement means (19) of the drive shaft (17) each engage with a predefined rotary angle play (α) between two driver bars (37) of the output shaft (34), wherein the drive shaft (17) and output shaft (34) are preferably mounted one in the other.

10. Load-torque lock according to Claim 9, **characterized in that** the drive-side engagement means (19) protrude axially from the end of the drive shaft (17) and each project with a rotary angle play (α) between two adjacent driver bars (37) of the output shaft.

11. Load-torque lock according to Claim 10, **characterized in that** the rotary angle play (α) between the drive shaft (17) and output shaft (34) is greater than the rotary angle play (γ) between the output shaft (34) and clamping element (24), and the rotary angle play (γ) of the latter is in turn greater than the rotary angle play (β) between the drive shaft (17) and cage (23).

12. Load-torque lock according to one of Claims 5 to 11, **characterized in that** the kidney-shaped clamping plates (30) have, on each of the inner sides of their end sections (30a), a slope (30b) which causes the end sections to taper and which, in order to release the clamping elements (24) from the housing (11), interacts with the projection (21) on the outer wall (20a) of the claw-shaped engagement means (19) of the drive shaft (17) in order to pivot the clamping elements (24) back into their neutral position.

13. Load-torque lock according to Claim 5, **characterized in that** the wall (13) of the housing bore (12) is provided with a uniform inner toothing (15), and **in that** the end sections (30a) of the clamping plates (30) have, on the outer circumference, a corresponding toothing with at least one tooth (32).

14. Load-torque lock according to Claim 5, **characterized in that** the wall (13) of the housing bore (12) is a clamping face (40), preferably with an increased coefficient of friction, and **in that** the end sections (30a) of the clamping plates (30) are formed as a friction face (41) on the outer circumference.

15. Load-torque lock according to one of Claims 6 to 14, **characterized in that** the axial play of the cantileveredly mounted cage (23) is bounded by in each case one stop (42, 43) on the drive shaft (17) and output shaft (34).

16. Load-torque lock according to Claim 15, **characterized in that** the stop (42) of the drive shaft (17) projects up to the drive-side end side of the rotary driver ribs (29) of the cage (23), and the stop (43) of the output shaft (34) projects up to the end side of the pivoting webs (33) of the clamping elements (24).

## Revendications

1. Dispositif de blocage de couple de charge pour bloquer automatiquement des couples côté charge en cas de suppression ou de disparition d'un couple côté entraînement tout en conservant la possibilité de transmettre des couples à partir du côté entraînement, comprenant:
un boîtier (11) solidaire du châssis, ayant un perçage de boîtier (12), centré, un arbre d'entraînement (17) monté à rotation, pénétrant avec des organes de prise (19) alignés axialement dans le perçage du boîtier, un arbre entraîné (34) monté à rotation, qui pénètre également dans le perçage du boîtier avec des organes de prise (37) alignés axialement et
au moins un organe de serrage (24) installé de manière excentrée dans le perçage du boîtier et qui est monté pivotant de façon qu'il soit d'une part bloqué ou fixé par serrage par le couple côté charge, par les organes de prise de l'arbre entraîné, contre la paroi du perçage de boîtier,
et d'autre part, entraîné de manière amovible et en rotation par le couple côté entraînement exercé par les organes d'entraînement de l'arbre d'entraînement pour être dégagé de la paroi du perçage de boîtier,
**caractérisé en ce que**
les organes de prise (37) de l'arbre entraîné (34) sont installés pour coopérer d'une part avec les couples côté moteur, avec des organes de prise (19) de l'arbre d'entraînement (17) et que d'autre part, pour des couples de charge, côté sortie, ils coopèrent avec au moins un organe de serrage (24).

2. Dispositif de blocage de couple de charge selon la revendication 1,
**caractérisé en ce que**
les organes de prise (37) de l'arbre entraîné (34) sont formés chacun par deux nervures d'entraînement, dirigées axialement vers l'extérieur, radialement à la périphérie, et qui sont écartées d'un intervalle périphérique prédéfini.

3. Dispositif de blocage de couple de charge selon la revendication 1 ou 2,
**caractérisé par**
au moins un organe de serrage (24) logé axialement dans une cage de forme annulaire (23) et qui est monté de manière flottante dans le perçage de boîtier (12) de préférence sur les organes de prise (19) de l'arbre entraîné (17) et il comporte des organes d'entraînement en rotation (29) qui coopèrent pour le couple côté entraînement, avec les organes de prise (19) de l'arbre d'entraînement (17).

4. Dispositif de blocage de couple de charge selon la revendication 3,
**caractérisé en ce que**
la cage de forme annulaire (23) se compose axialement de deux parties annulaires (23a, 23b) entre lesquelles plusieurs et de préférence trois organes de serrage (24) répartis régulièrement à la périphérie peuvent pivoter, ces organes ayant à leur tour des moyens de pivotement (33) qui coopèrent avec les organes de prise (37) de l'arbre entraîné (34) pour des couples exercés du côté de la charge.

5. Dispositif de blocage de couple de charge selon la revendication 4,
**caractérisé en ce que**
les organes de serrage (24) sont constitués par des plaques de serrage (30) en forme de rognons, montées de manière pivotante au niveau de leur centre de gravité par l'intermédiaire de tourillons de palier (31), axiaux, des deux côtés sur les deux parties annulaires (23a, 23b) de la cage (23) et dont au niveau la périphérie extérieure de leurs deux segments d'extrémité (30a) est adaptée au contour de la paroi du perçage de boîtier (12).

6. Dispositif de blocage de couple de charge selon la revendication 5,
**caractérisé en ce que**
dans la région de leurs tourillons de palier (31), les organes de serrage (24) ont chacun une nervure de pivotement (33) dirigée radialement vers l'intérieur, cette nervure étant alignée axialement et elle pénètre chacune entre deux nervures d'entraînement axial (37) de l'arbre entraîné (34) avec un jeu d'angle de rotation (α) prédéfini.

7. Dispositif de blocage de couple de charge selon l'une des revendications 3 à 6,
**caractérisé en ce que**
au niveau de la périphérie intérieure, dans chaque zone périphérique située entre deux organes de serrage (24), la cage annulaire (23) comporte une nervure d'entraînement en rotation (29) dirigée axialement et tournée radialement vers l'intérieur, cette nervure pénétrant respectivement dans une cavité axiale (22) des organes de prise (19) de l'arbre d'entraînement (17) avec un jeu d'angle de rotation (β) prédéfini.

8. Dispositif de blocage de couple de charge selon la revendication 7,
**caractérisé en ce que**
les organes de prise (19) de l'arbre d'entraînement (17) sont en forme de griffes et ont chacun deux branches (20), dirigées radialement vers l'extérieur, arrivant de préférence jusqu'à la périphérie intérieure de la cage (23), ces branches étant dirigées axialement et elles ont un écartement périphérique formant la cavité axiale (22).

9. Dispositif de blocage de couple de charge selon la revendication 8,
**caractérisé en ce que**
chacun des organes de prise (19) en forme de griffes de l'arbre d'entraînement (17) chacun pénètre avec un jeu d'angle de rotation (α) prédéfini entre deux nervures d'entraînement (37) de l'arbre entraîné (34), et l'arbre d'entraînement et l'arbre entraîné (17, 34) sont de préférence montés l'un dans l'autre.

10. Dispositif de blocage de couple de charge selon la revendication 9,
**caractérisé en ce que**
les organes de prise (19) côté entraînement dépassent axialement de l'extrémité de l'arbre d'entraînement (17), et viennent respectivement avec un jeu d'angle de rotation (α) entre deux nervures d'entraînement (37) voisins de l'arbre entraîné.

11. Dispositif de blocage de couple de charge selon la revendication 10,
**caractérisé en ce que**
le jeu de l'angle de rotation (α) entre l'arbre d'entraînement et l'arbre entraîné (17, 34) est supérieur au jeu d'angle de rotation (γ) entre l'arbre entraîné (34) et l'organe de serrage (24) et le dernier angle de rotation (γ) est lui-même supérieur au jeu d'angle de rotation (β) entre l'arbre d'entraînement (17) et la cage (23).

12. Dispositif de blocage de couple de charge selon l'une des revendications 8 à 11,
**caractérisé en ce que**
les plaques de serrage (30) en forme de rognons présentent chacun sur le côté intérieur de leurs segments d'extrémité (30a), une rampe (30b) qui diminue vers les segments d'extrémité et ces rampes coopèrent pour libérer les organes de serrage (24) par rapport au boîtier (11) avec un bec (21) de la paroi extérieure (20a) des organes de prise (19) en forme de griffes de l'arbre d'entraînement (17) pour rappeler par basculement les organes de serrage (24) dans leur position neutre.

13. Dispositif de blocage de couple de charge selon la revendication 5,
**caractérisé en ce que**
la paroi (13) du perçage de boîtier (12) a une denture intérieure (15) régulière et **en ce que** les segments d'extrémité (30a) des plaques de serrage (30) comportent à la périphérie extérieure, une denture correspondante avec au moins une dent (32).

14. Dispositif de blocage de couple de charge selon la revendication 5,
**caractérisé en ce que**
la paroi (13) du perçage de boîtier (12) a une surface de serrage (40) de préférence avec un coefficient de friction élevé et à la périphérie extérieure les segments d'extrémité (30a) des plaques de serrage (30) ont une surface de friction (41).

15. Dispositif de blocage de couple de charge selon l'une des revendications 6 à 14,
**caractérisé en ce que**
le jeu axial de la cage (23) montée flottante est limité par chaque fois une butée (42, 43) de l'arbre d'entraînement et de l'arbre entraîné (17, 34).

16. Dispositif de blocage de couple de charge selon la revendication 15,
**caractérisé en ce que**
la butée (42) de l'arbre d'entraînement (17) arrive jusque devant la face frontale côté entraînement des nervures d'entraînement en rotation (29) de la cage (23) et la butée (43) de l'arbre entraîné (34) arrive jusque devant la face frontale de la nervure de pivotement (34) des organes de serrage (24).
